# FASCICULE DE BREVET EUROPEEN

(11) **EP 0 943 823 B1**
(45) Date de publication et mention de la délivrance du brevet: **03.12.2003**
(21) Numéro de dépôt: 99400637.7
(22) Date de dépôt: 16.03.1999
(51) Int. Cl.: F16B 13/06, F16B 13/00

(54) **Cheville d'ancrage à noyau d'expansion**
Verankerungsdübel mit einem Spreizkern
Anchor dowel with an expansion core

(30) Priorité: 16.03.1998 FR 9803176
(43) Date de publication de la demande: 22.09.1999
(73) Titulaire: SOCIETE DE PROSPECTION ET D'INVENTIONS TECHNIQUES SPIT, 26501 Bourg-Les-Valence Cédex (FR)
(72) Inventeur: Gauthier, Alain, 07300 Saint Jean de Muzols (FR); Barthomeuf, Jean-Paul, 26300 Bourg de Peage (FR)
(74) Mandataire: Bloch, Gérard

(56) Documents cités:
- EP-A- 0 365 477
- EP-A- 0 524 137
- DE-A- 4 220 300
- DE-U- 8 904 216
- GB-A- 1 353 559

## Description

L'invention concerne une cheville d'ancrage à noyau d'expansion destinée à être introduite et ancrée dans un matériau, une paroi murale par exemple, afin d'y fixer un objet quelconque.

Plus particulièrement, l'invention concerne une cheville d'ancrage comprenant une tige de fixation, une douille emboutie expansible et un noyau d'expansion solidaire en translation de la tige de fixation, destiné à expandre la douille, la douille ménageant au moins une fente s'élargissant vers une extrémité libre de la douille en formant au moins une dent d'expansion coopérant avec le noyau. La dent d'expansion est prévue pour diminuer les contraintes s'exerçant sur la douille lors de son expansion et ainsi faciliter l'expansion.

Avec les chevilles de ce type, il existe un risque non négligeable que le bord intérieur de la ou des dents de la douille expansible ne s'ancre dans le noyau d'expansion en l'abîmant et en contrariant sa translation vers l'extérieur du trou de réception de la cheville. L'opérateur doit alors exercer un effort très important pour libérer le noyau d'expansion et ancrer la cheville.

L'invention vise à pallier cet inconvénient.

A cet effet, l'invention concerne une cheville du type défini ci-dessus, caractérisée par le fait que la paroi intérieure du bord de la dent d'expansion est émoussée, son pourtour étant arrondi.

La dent est ainsi rendue moins blessante et la douille glisse mieux le long du noyau.

On notera que GB-A-1 353 559 enseigne une douille métallique formée d'une pluralité de segments dont l'extrémité est émoussée, mais seulement cette extrémité, si bien que la douille ne glisse pas parfaitement sur le noyau.

Avantageusement, l'épaisseur de la dent diminue vers ladite extrémité libre de la douille. Grâce à cela, on facilite l'expansion de la douille.

Avantageusement encore, la douille comprend au moins un bossage anti-rotation embouti. La surface de contact entre la douille et le noyau d'expansion est ainsi moins importante. Grâce à cela, on diminue le frottement entre la douille et le noyau d'expansion, ce qui facilite le mouvement relatif du cône et de la douille.

L'invention sera mieux comprise à l'aide de la description suivante d'une forme de réalisation particulière de la cheville d'ancrage de l'invention en référence au dessin annexé sur lequel:

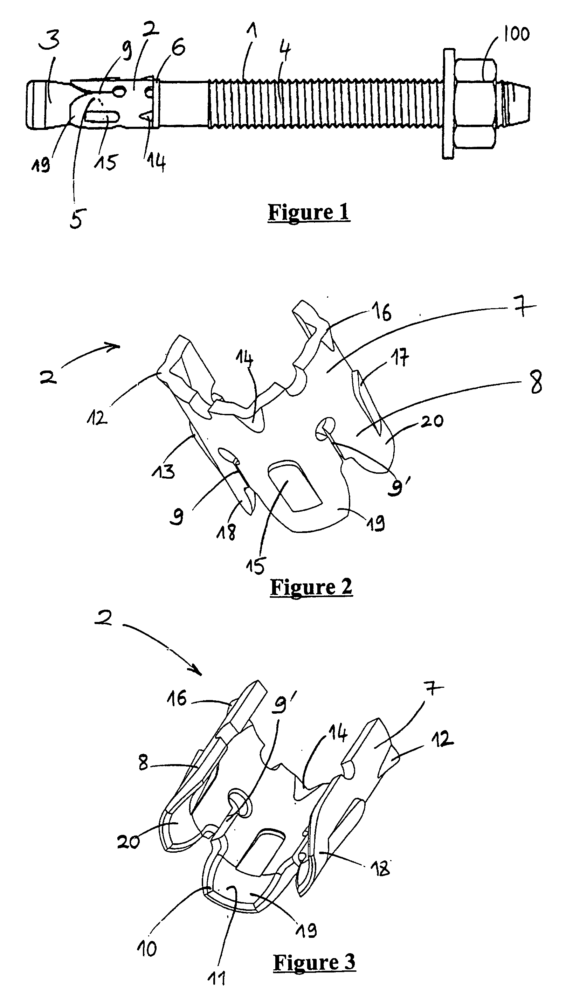

- la figure 1 représente une vue schématique de côté de la cheville d'ancrage, selon la forme de réalisation particulière de l'invention;
- la figure 2 représente une vue en perspective d'une douille expansible de la cheville de la figure 1 et
- la figure 3 représente une autre vue en perspective de la douille expansible de la figure 2.

La cheville d'ancrage comprend une tige de fixation 1, une douille expansible 2 et un noyau d'expansion 3, ici en forme de cône tronqué.

La tige de fixation 1 comprend une portion de fixation 4, extérieurement filetée, et une portion d'expansion 5, adjacente à la portion de fixation 4 le long de l'axe de la tige 1. La portion d'expansion 5 est solidaire, à son extrémité opposée à l'extrémité de liaison avec la portion de fixation 4, du cône d'expansion 3 qui s'évase vers l'extrémité libre de la tige 1. La tige 1 est ainsi solidaire en translation du noyau d'expansion 3. Un épaulement 6, constituant une butée pour la douille 2, est prévu entre la portion de fixation 4 et la portion d'expansion 5.

La douille expansible 2 est montée autour de la portion d'expansion 5 et maintenue en position entre le cône d'expansion 3 et l'épaulement 6.

La douille 2, ouverte (c'est-à-dire non complètement refermée, enroulée, sur elle-même), comprend ici une partie non fendue 7 et une partie d'ancrage 8, adjacente à la partie non fendue 7 le long de l'axe de la douille 2.

La partie d'ancrage 8 ménage ici deux fentes d'ancrage 9, 9', de largeur sensiblement nulle au voisinage de la partie non fendue 7 et s'élargissant vers l'extrémité libre de la partie d'ancrage 8 de la douille 2, en formant trois dents d'expansion 18-20 coopérant avec le cône d'expansion 3. L'élargissement des fentes 9, 9' permet de diminuer les contraintes subies par la partie d'ancrage 8 de la douille 2, lors de l'expansion. Les dents d'expansion 18-20 sont ainsi destinées à faciliter l'expansion de la douille 2.

La partie d'ancrage 8 comporte ici trois bossages anti-rotation 13, 15, 17, destinés à bloquer la rotation de la cheville. Ces bossages 13, 15, 17 sont globalement de forme rectangulaire et formés par emboutissage de la paroi de la douille 2.

La partie non fendue 7 comporte également trois bossages anti-rotation 12, 14, 16, emboutis, situés à proximité du bord d'extrémité libre de la partie non fendue 7.

La paroi intérieure 10 du bord des dents 18-20 de la douille expansible 2 est émoussée. En d'autres termes, le pourtour des dents 18-20 est arrondi et ainsi rendu moins blessant, du côté intérieur de la douille 2. Grâce à cela, la douille 2 n'abîme pas le noyau d'expansion 3. En outre, l'épaisseur de la paroi 11 des dents d'expansion 18-20 diminue vers l'extrémité libre de la partie d'ancrage 8, la surface intérieure de la paroi 11 des dents 18-20 s'évasant en continu vers l'extrémité libre.

Afin d'ancrer la cheville dans un support, on perce au préalable un trou dans le support dans lequel on introduit la cheville d'ancrage. Puis, on visse un écrou 100 sur la portion de fixation 4 de la tige 1. De façon connue, les bossages 12-17 s'ancrent dans la paroi du trou et bloquent ainsi la rotation de la cheville, de sorte que sous l'action du vissage de l'écrou 100, la tige de fixation 1 est entraînée en translation vers l'extérieur du trou et le cône d'expansion 3 expanse la douille 2 qui s'ancre dans le support.

## Revendications

1. Cheville d'ancrage comprenant une tige de fixation (1), une douille emboutie expansible (2) et un noyau d'expansion (3) solidaire en translation de la tige de fixation (1), destiné à expandre la douille (2), la douille (2) ménageant au moins une fente (9, 9') s'élargissant vers une extrémité libre de la douille (2) en formant au moins une dent d'expansion (18-20) coopérant avec le noyau d'expansion (3), **caractérisée par le fait que** la paroi intérieure du bord de la dent (18-20) est émoussée, son pourtour étant arrondi.

2. Cheville selon la revendication 1, dans laquelle l'épaisseur de la dent (18-20) diminue vers ladite extrémité libre de la douille (2).

3. Cheville selon l'une des revendications 1 et 2, dans laquelle la douille (2) comprend au moins un bossage anti-rotation embouti (13, 15, 17).

4. Cheville selon la revendication 3, dans laquelle le bossage anti-rotation (13, 15, 17) est globalement de forme rectangulaire.

## Claims

1. Anchor bolt comprising a fixing rod (1), an expandable stamped sleeve (2) and an expansion core (3) integral in translation with the fixing rod (1), intended to expand the sleeve (2), at least a slot (9, 9') being provided in the sleeve (2), widening out larger towards a free end of the sleeve (2) and forming at least an expansion tooth (18-20) cooperating with the expansion core (3), **characterised in that** the inner wall (10) of the edge of the tooth (18-20) is blunt, its periphery beeing rounded.

2. Anchor bolt according to claim 1, wherein the thickness of the tooth (18-20) narrows towards said free end of the sleeve (2).

3. Anchor bolt according to one of claims 1 and 2, wherein the sleeve (2) comprises at least one stamped anti-rotation boss (13, 15, 17).

4. Anchor bolt according to claim 3, wherein the anti-rotation boss (13, 15, 17) is of a general rectangular shape.

## Patentansprüche

1. Verankerungsdübel mit einer Befestigungsstange (1), einer aufgewölbten spreizbaren Hülse (2) und einem Spreizkern (3), der translationsfest mit der Befestigungsstange (1) verbunden ist und die Hülse (2) spreizen soll, die mindestens einen Schlitz (9, 9') aufweist, der sich zu einem freien Ende der Hülse (2) hin erweitert, indem er mindestens einen Spreizzahn (18 - 20) bildet, der mit dem Spreizkern (3) zusammenwirkt, **dadurch gekennzeichnet, dass** die Innenwand des Rands des Zahns (18 - 20) abgestumpft und sein Umfang abgerundet ist.

2. Dübel nach Anspruch 1, bei dem die Dicke des Zahns (18 - 20) zum freien Ende der Hülse (2) hin abnimmt.

3. Dübel nach Anspruch 1 oder 2, bei dem die Hülse (2) mindestens einen aufgewölbten Drehsicherungshöcker (13, 15, 17) umfasst.

4. Dübel nach Anspruch 3, bei dem der Drehsicherungshöcker (13, 15, 17) allgemein rechteckig ist.
